# EUROPÄISCHE PATENTSCHRIFT

(11) **EP 3 507 178 B1**
(45) Veröffentlichungstag und Bekanntmachung des Hinweises auf die Patenterteilung: **15.07.2020**
(21) Anmeldenummer: 17771347.6
(22) Anmeldetag: 30.08.2017
(51) Int. Cl.: B62K 9/00, B62K 9/02

(54) **RUTSCH-AUTO**
PUSH BUGGY
VOITURE PORTEUR ENFANT

(30) Priorität: 31.08.2016 DE 102016116229; 15.09.2016 DE 102016117382
(43) Veröffentlichungstag der Anmeldung: 10.07.2019
(73) Patentinhaber: Ponticelli, Pius, 4616 Kappel (CH)
(72) Erfinder: Ponticelli, Pius, 4616 Kappel (CH)
(74) Vertreter: Patentanwälte und Rechtsanwalt Weiß, Arat & Partner mbB
(86) Internationale Anmeldenummer: PCT/EP2017/071754
(87) Internationale Veröffentlichungsnummer: WO 2018/041889

(56) Entgegenhaltungen:
- WO-A2-2015/092023
- DE-A1-102011 054 270

## Beschreibung

### Technisches Gebiet

Die Erfindung betrifft ein Rutsch-Auto nach dem Oberbegriff von Schutzanspruch 1 sowie dem nebengeordneten Schutzanspruch 2.

### Stand der Technik

Aus dem Stand der Technik sind verschiedene Rutsch-Autos oder auch Roller bekannt und gebräuchlich. So ist beispielsweise in der DE 20 2011 001 596 U1 ein Roller beschrieben, welcher sowohl von Kleinkindern als auch grösseren Kindern gefahren werden kann. Hierzu kann der Roller für die Benutzung durch Kleinkinder mit einem Sattel oder Sitz sowie einer speziellen Lenkeinrichtung versehen werden, welche, wenn das Kind grösser geworden ist, einzeln demontiert werden können.

Weiterhin ist beispielsweise aus der DE 297 15 943 U1 ein Kunststoff-Kinderauto bekannt, welches mittels Fuss-Abstossung zu bewegen ist, mit vier Rädern, von welchen zwei vordere lenkbar sind

Nachteilig an den aus dem Stand der Technik bekannten Rutschautos ist der Umstand einer unstabilen und unsicheren Carving-Fahreigenschaft und dass unverhältnismässig grosse Herstellungskosten erforderlich sind.

Aus der WO 2015/092023 ist eine Sitzvorrichtung für einen Roller, insbesondere für ein Kickboard bekannt. Eine Lenkung des Rollers erfolgt im Wesentlichen über eine Gewichtsverlagerung.

Aus der GB 2183568 A ist ein Rutsch-Auto mit einem Sitzschalenkörper bekannt, entsprechend der Präambel der Ansprüche 1 und 2. Weiterhin ist aus der DE 10 2011 054 270 A ein Laufrad mit einen Sitz und einem Sitzraum bekannt, der sich zu beiden Seiten unterhalb des Sitzes befindet. Der Sitzplatz ist vorgesehen, um die Beine des abstoßenden Lokomotivführers zu platzieren. Die lenkbaren Vorderräder sind nach dem Doppelschwenklenkprinzip vorgesehen. Die Achsschenkel mit Lenkarmen sind mit den Vorderrädern verbunden.

### Aufgabe der Erfindung

Aufgabe der Erfindung ist es, ein Rutschauto zur Verfügung zu stellen, welches die Nachteile aus dem Stand der Technik beseitigt und eine einfache und kostengünstige Konstruktion aufweist sowie ein unterschiedliches Fahrverhalten ermöglicht. Eine lange Lebensdauer ist ebenfalls erwünscht.

### Lösung der Aufgabe

Zur Lösung der Aufgabe führen die Merkmale nach den Ansprüchen 1 bis 3.

Ein Rutsch-Auto weist einen Sitzschalenkörper mit einem Lenkgriff, einer Sitzfläche und zumindest einer Fläche zum Aufstellen eines Fusses auf. Bevorzugt ist selbstverständlich auf jeder Seite des Sitzschalenkörpers eine Fläche zum Aufstellen eines Fusses vorgesehen. Der Sitzschalenkörper nebst der Sitzfläche und der Fläche zum Aufstellen des Fusses sind bevorzugt aus nur einem einzigen Kunststoffteil hergestellt. Im Rahmen der Erfindung soll jedoch auch liegen, mehr als ein Kunststoffteil zu verwenden, d.h. den Sitzschalenkörper nebst der Sitzfläche und der Fläche zum Aufstellen des Fusses aus beispielsweise zwei oder mehr Kunststoffteilen herzustellen und/oder sogar den Lenkgriff, welcher vorliegend mittels geeigneter Befestigungsmittel/-elemente wie beispielsweise Clip-Rastelemente oder dergleichen, mit dem Sitzschalenkörper verbunden ist, ebenfalls einstückig mit dem Sitzschalenkörper herzustellen. Weiterhin soll von der vorliegenden Erfindung umfasst sein, ein anderes Material als Kunststoff zu verwenden.

Der Sitzschalenkörper weist weiterhin an einer Frontseite zumindest zwei Rollen und an seiner Rückseite zumindest weitere zwei Rollen auf. Die Rollen sind an dem Sitzschalenkörper angeordnet und sind jeweils Teil einer Neige-Lenk-Konstruktion. Damit sind zumindest zwei Neige-Lenk-Konstruktionen vorhanden, die quasi spielverkehrt zueinander angeordnet sind. Weitere Bestandteile der Neige-Lenk-Konstruktionen sind jeweils Achsen, Verbindungsarme, jeweils eine Verbindungsstange und gegebenenfalls jeweils eine Federkonstruktion. Eine Verbindung der beiden Neige-Lenk-Konstruktionen untereinander, d.h. der Neige-Lenk-Konstruktion der Frontseite mit der Neige-Lenk-Konstruktion der Rückseite, beispielsweise in Form einer Stange, einer gemeinsamen Metallplatte oder dergleichen, ist nicht vorgesehen. Es handelt sich um zwei separate Neige-Lenk-Konstruktionen.

Das Vorhandensein der Neige-Lenk-Konstruktionen bedeutet, dass das Rutsch-Auto mittels Gewichtsverlagerung des Benutzers auf dem Sitzschalenkörper oder durch Umschwenken des Lenkgriffes von der Sitzfläche aus gesehen nach rechts oder links in verschiedene Richtungen gelenkt werden kann.

Eine Gewichtsverlagerung des Benutzers auf dem Sitzschalenkörper oder auch über den Lenkgriff in eine Richtung und die damit zusammenhängende Neigung einer der Rollen bewirkt über die Neige-Lenk-Konstruktion, d.h. die Konstruktion von Achsen, Verbindungsarmen sowie einer Verbindungsstange eine entsprechende Neigung der jeweils anderen Rolle.

Um eine Gewichtsverlagerung des Benutzers bzw. die dadurch hervorgerufene Aktivierung der Neige-Lenk-Konstruktionen zu unterstützen, ist die Formgebung des Sitzschalenkörpers derart gewählt, dass sich zwischen der bzw. den Flächen zum Aufstellen eines Fusses und dem Lenkgriff ausreichend Anlagefläche für die Knie des Benutzers bietet. Auf diese Weise kann der Benutzer hauptsächlich durch das Andrücken eines seiner Knie an der Anlagefläche des Sitzschalenkörpers die Neige-Lenk-Konstruktionen aktivieren und muss weniger mit seinem Schulterbereich arbeiten. Dies wäre der Fall, wenn keine Anlagefläche für die Knie vorgesehen wäre, was selbstverständlich trotzdem im Rahmen der Erfindung liegen soll.

Die Rollen sind um jeweils eine eigene Achse drehbar angeordnet. Ein jeweils der Rolle gegenüberliegendes Achsende ist mit einem Verbindungsarm bewegbar über einen Achsbolzen verbunden.

Diese Verbindungsarme wiederum sind einerseits über Schrauben mit dem Sitzschalenkörper verbunden, andererseits sind sie über Bolzen mit der Verbindungsstange verbunden. Die Verbindungsstange ist über die Bolzen beweglich an den Verbindungsarmen angeordnet und verbindet folglich über die Verbindungsarme die Rollen bewegungstechnisch miteinander. Eine Gewichtsverlagerung des Benutzers auf dem Sitzschalenkörper in eine beliebige Richtung und die damit zusammenhängende Neigung einer der Rollen bewirkt über die Konstruktion der Achsen, der Verbindungsarme sowie der Verbindungsstange eine entsprechende Neigung der jeweils anderen Rolle.

Anstelle beispielsweise der Rollen an der Rückseite des Sitzschalenkörpers kann auch zumindest eine Walze vorgesehen sein. Ist zumindest eine Walze anstelle der Rollen vorgesehen, so ist auch diese nicht näher gezeigte Walze an dem Sitzschalenkörper drehbar an einem nicht näher gezeigten Achsbolzen angeordnet. Die Walze kann dabei einen geringeren Umfang als die Rollen an der Frontseite des Sitzschalenkörpers aufweisen. Die Walze kann aus einer Einzelwalze oder mehreren einzelnen Walzen bestehen, welche um eine einzige Walzenachse drehbar gelagert sind.

Eine U-förmige Federkonstruktion ist sowohl an der Frontseite als auch an der Rückseite vorgesehen. Die Federkonstruktionen sind jeweils sowohl mit der zugehörigen Verbindungsstange der frontseitigen Neige-Lenk-Konstruktion bzw. der rückseitigen Neige-Lenk-Konstruktion auf nicht näher gezeigte Weise als auch mit dem Sitzschalenkörper auf der Frontseite bzw. der Rückseite bevorzugt über eine Schraube verbunden. Die Federkonstruktionen dienen dazu, alle Rollen wieder gleichmässig auszurichten, wenn die Kraft der Gewichtsverlagerung des Benutzers auf der Sitzfläche des Rusch-Autos nachlässt.

Die Schrauben an der Frontseite des Sitzschalenkörpers bzw. die Schrauben an der Rückseite des Sitzschalenkörpers, welche die Neige-Lenk-Konstruktionen mit jeweils ihren zugehörigen Rollen, Verbindungsarmen, Verbindungsstange und Federkonstruktion an der Frontseite bzw. der Rückseite des Sitzschalenkörpers befestigen, können in unterschiedlichen Winkeln in der Frontseite bzw. der Rückseite des Sitzschalenkörpers befestigt sein. Das bedeutet, dass die jeweilige Neige-Lenk-Konstruktion aus Rollen, Verbindungsarmen und Verbindungsstange nebst Federkonstruktion auf unterschiedliche Weise mit unterschiedlichen (Neigungs-)Winkeln in bzw. an dem Sitzschalenkörper angeordnet werden können. Auf diese Weise können unterschiedliche Fahrverhalten erzeugt werden.

Weiterhin ist an dem Sitzschalenkörper ein Abschleppring vorgesehen, über welchen das Rutsch-Auto über ein nicht näher gezeigtes Seil oder dergleichen abgeschleppt, gezogen oder dergleichen werden kann.

### Figurenbeschreibung

Weitere Vorteile, Merkmale und Einzelheiten der Erfindung ergeben sich aus der nachfolgenden Beschreibung eines Ausführungsbeispiels sowie anhand der Zeichnungen; diese zeigen in
Figur 1 eine Seitenansicht eines Rutsch-Autos gemäss der vorliegenden Erfindung;
Figur 2 eine Unteransicht des Rutsch-Autos nach Figur 1; und
Figur 3 eine perspektivische Unteransicht des Rutsch-Autos nach Figur 1.

### Ausführungsbeispiel

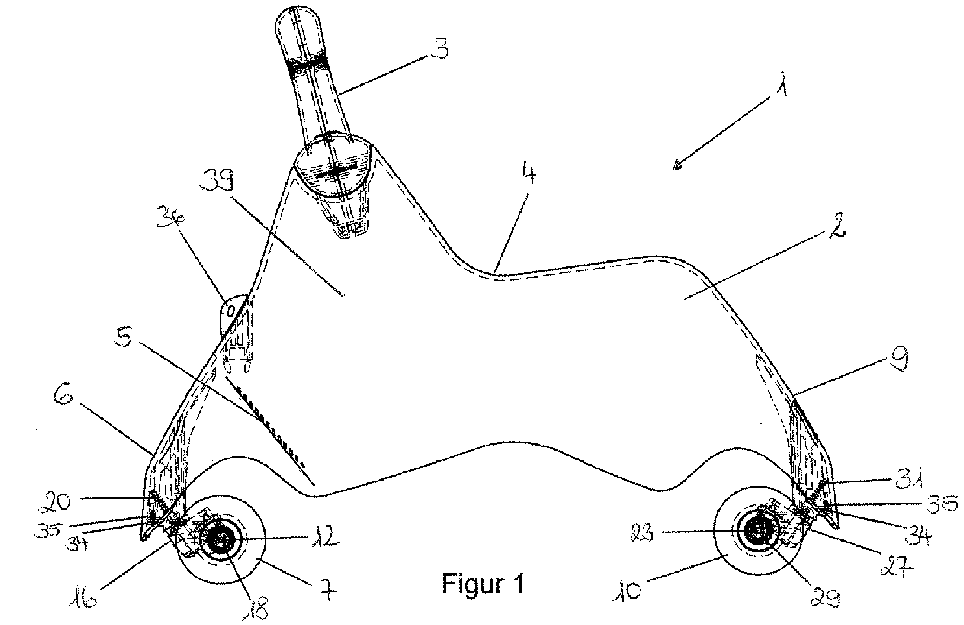

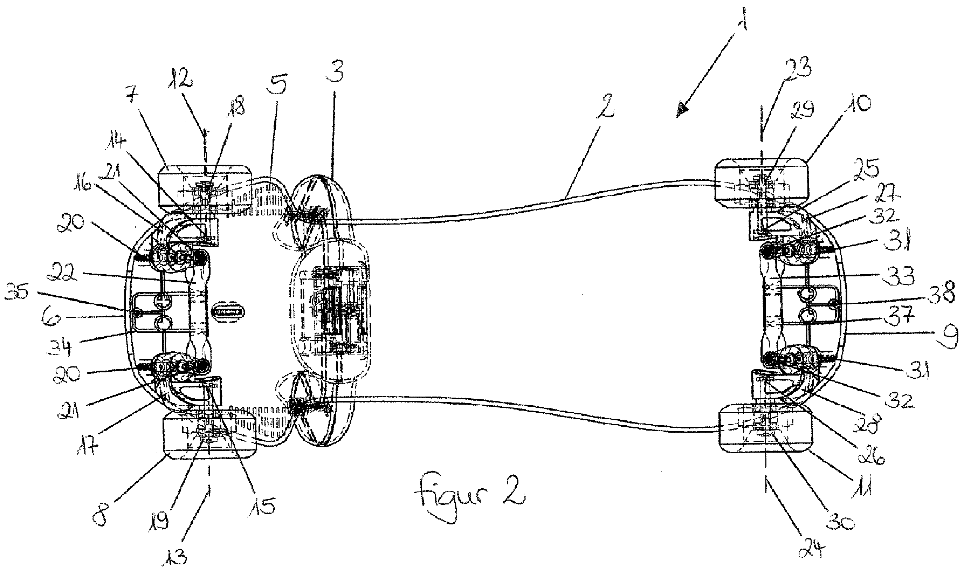

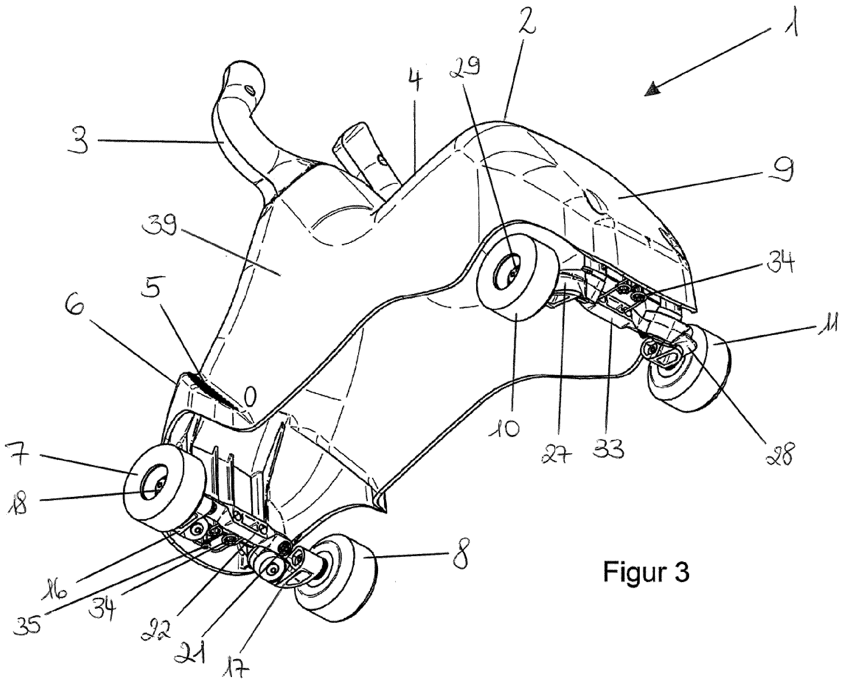

Gemäss den Figuren 1 bis 3 weist ein Rutsch-Auto 1 einen Sitzschalenkörper 2 mit einem Lenkgriff 3, einer Sitzfläche 4 und Flächen 5 zum Aufstellen eines Fusses auf. Der Sitzschalenkörper 2 nebst der Sitzfläche 4 und der Fläche 5 zum Aufstellen des Fusses sind bevorzugt aus nur einem einzigen Kunststoffteil hergestellt. Im Rahmen der Erfindung soll jedoch auch liegen, mehr als ein Kunststoffteil zu verwenden, d.h. den Sitzschalenkörper 2 nebst der Sitzfläche 4 und der Fläche 5 zum Aufstellen des Fusses aus beispielsweise zwei oder mehr Kunststoffteilen herzustellen und/oder sogar den Lenkgriff 3, welcher vorliegend mittels geeigneter Befestigungsmittel/-elemente mit dem Sitzschalenkörper 2 verbunden ist, ebenfalls einstückig mit dem Sitzschalenkörper 2 herzustellen.

Der Sitzschalenkörper 2 weist weiterhin an seiner Frontseite 6 zumindest zwei Rollen 7 und 8 und an seiner Rückseite 9 weitere zwei Rollen 10 und 11 auf. Die Frontseite 6 ist die Seite des Sitzschalenkörpers 2, die in Richtung einer üblichen Fahrtrichtung angeordnet ist, wenn ein Benutzer auf der Sitzfläche 4 sitzt, den Lenkgriff 3 festhält und nach vorne fährt. Die Rückseite 9 ist die Seite des Sitzschalenkörpers 2, welche entgegengesetzt der oben beschriebenen Fahrtrichtung angeordnet ist. D.h. der Benutzer sitzt auf der Sitzfläche 4, hält den Lenkgriff 3 fest und fährt dann rückwärts.

Die Rollen 7 und 8 sind an dem Sitzschalenkörper 2 angeordnet und sind Teil einer Neige-Lenk-Konstruktion. Das bedeutet, dass das Rutsch-Auto 1 mittels Gewichtsverlagerung des Benutzers auf dem Sitzschalenkörper 2 oder durch Umschwenken des Lenkgriffes 3 von der Sitzfläche 4 aus gesehen nach rechts oder links in verschiedene Richtungen gelenkt werden kann.

Die Rollen 7 und 8 sind um jeweils eine eigene Achse 12 und 13 drehbar angeordnet. Ein jeweils der Rolle 7 bzw. 8 gegenüberliegendes Achsende 14 bzw. 15 ist mit einem Verbindungsarm 16 bzw. 17 bewegbar über einen Achsbolzen 18 bzw. 19 verbunden.

Diese Verbindungsarme 16 und 17 wiederum sind einerseits über Schrauben 20 mit dem Sitzschalenkörper 2 verbunden, andererseits sind sie über Bolzen 21 mit einer Verbindungsstange 22 verbunden. Die Verbindungsstange 22 ist über die Bolzen 21 beweglich an den Verbindungsarmen 16 und 17 angeordnet und verbindet folglich über die Verbindungsarme 16 und 17 die Rollen 7 und 8 bewegungstechnisch miteinander. Eine Gewichtsverlagerung des Benutzers auf dem Sitzschalenkörper 2 in eine beliebige Richtung und die damit zusammenhängende Neigung einer der Rollen 7 bzw. 8 bewirkt über die Konstruktion der Achsen 12 bzw. 13, der Verbindungsarme 16 bzw. 17 sowie der Verbindungsstange 22 eine entsprechende Neigung der jeweils anderen Rolle 8 bzw. 7.

Für die Rollen 10 und 11 gilt eine ähnliche Konstruktion. Die Rollen 10 und 11 sind ebenfalls an dem Sitzschalenkörper 2 angeordnet und sind Teil einer Neige-Lenk-Konstruktion. Diese ist jedoch quasi spielverkehrt zu der oben beschriebenen Neige-Lenk-Konstruktion für die Rollen 7 und 8 angeordnet. Das Vorhandensein der Neige-Lenk-Konstruktion bedeutet, dass das Rutsch-Auto 1 mittels Gewichtsverlagerung des Benutzers auf dem Sitzschalenkörper 2 oder durch Umschwenken des Lenkgriffes 3 von der Sitzfläche 4 aus gesehen nach rechts oder links in verschiedene Richtungen gelenkt werden kann.

Die Rollen 10 und 11 sind um jeweils eine eigene Achse 23 und 24 drehbar angeordnet. Ein jeweils der Rolle 10 bzw. 11 gegenüberliegendes Achsende 25 bzw. 26 ist mit einem Verbindungsarm 27 bzw. 28 bewegbar über einen Achsbolzen 29 bzw. 30 verbunden.

Diese Verbindungsarme 27 und 28 wiederum sind einerseits über Schrauben 31 mit dem Sitzschalenkörper 2 verbunden, andererseits sind sie über Bolzen 32 mit einer Verbindungsstange 33 verbunden. Die Verbindungsstange 33 ist über die Bolzen 32 beweglich an den Verbindungsarmen 27 und 28 angeordnet und verbindet folglich über die Verbindungsarme 27 und 28 die Rollen 10 und 11 bewegungstechnisch miteinander. Eine Gewichtsverlagerung des Benutzers auf dem Sitzschalenkörper 2 in eine beliebige Richtung und die damit zusammenhängende Neigung einer der Rollen 10 bzw. 11 bewirkt über die Konstruktion der Achsen 23 bzw. 24, der Verbindungsarme 27 bzw. 28 sowie der Verbindungsstange 33 eine entsprechende Neigung der jeweils anderen Rolle 11 bzw. 10.

Anstelle beispielsweise der Rollen 10 und 11 kann auch zumindest eine Walze vorgesehen sein.

Ist zumindest eine Walze anstelle der Rollen 10 und 11 vorgesehen, so ist auch diese nicht näher gezeigte Walze an dem Sitzschalenkörper 2 drehbar an einem nicht näher gezeigten Achsbolzen angeordnet. Die Walze kann dabei einen geringeren Umfang als die Rollen 7 und 8 auf weisen. Die Walze kann aus einer Einzelwalze oder mehreren einzelnen Walzen bestehen, welche um eine einzige Walzenachse drehbar gelagert sind.

Eine U-förmige Federkonstruktion 34 bzw. 37 ist sowohl an der Frontseite 6 als auch an der Rückseite 9 vorgesehen. Die Federkonstruktion 34 bzw. 37 ist sowohl mit der Verbindungsstange 22 bzw. 33 auf nicht näher gezeigte Weise als auch mit dem Sitzschalenkörper 2 auf der Frontseite 6 bzw. der Rückseite 9 bevorzugt über eine Schraube 35 bzw. 38 verbunden. Sie dient dazu, die Rollen 7 und 8 bzw. 10 und 11 wieder gleichmässig auszurichten, wenn die Kraft der Gewichtsverlagerung des Benutzers auf der Sitzfläche 4 des Rusch-Autos 1 nachlässt.

Die Schrauben 20 an der Frontseite 6 des Sitzschalenkörpers 2 bzw. die Schrauben 31 an der Rückseite 9 des Sitzschalenkörpers 2 können in unterschiedlichen Winkeln in der Frontseite 6 bzw. der Rückseite 9 des Sitzschalenkörpers 2 befestigt sein. Das bedeutet, dass das Konstrukt aus Rollen 7, 8 bzw. 10, 11, Verbindungsarm 14, 15 bzw. 27, 28 und Verbindungsstange 22 bzw. 33 nebst Federkonstruktion 34 bzw. 37 auf unterschiedliche Weise mit unterschiedlichen (Neigungs-)Winkeln in bzw. an dem Sitzschalenkörper 2 angeordnet werden können. Auf diese Weise können unterschiedliche Fahrverhalten erzeugt werden.

Um eine Gewichtsverlagerung des Benutzers bzw. die dadurch hervorgerufene Aktivierung der Neige-Lenk-Konstruktionen zu unterstützen, ist die Formgebung des Sitzschalenkörpers 2 derart gewählt, dass sich zwischen der bzw. den Flächen 5 zum Aufstellen eines Fusses und dem Lenkgriff 3 ausreichend Anlagefläche 39 für die Knie des Benutzers bietet. Auf diese Weise kann der Benutzer hauptsächlich durch das Andrücken eines seiner Knie an der Anlagefläche 39 des Sitzschalenkörpers eine Gewichtsverlagerung hervorrufen und dadurch die Neige-Lenk-Konstruktionen aktivieren und muss weniger mit seinem Schulterbereich arbeiten.

Weiterhin ist an dem Sitzschalenkörper 2 ein Abschleppring 36 vorgesehen, über welchen das Rutsch-Auto 1 über ein nicht näher gezeigtes Seil oder dergleichen abgeschleppt, gezogen oder dergleichen werden kann.

**Bezugszeichenliste**

| | | | | | |
|---|---|---|---|---|---|
| 1 | Rusch-Auto | 34 | Federkonstruktion | 67 | |
| 2 | Sitzschalenkörper | 35 | Schraube | 68 | |
| 3 | Lenkgriff | 36 | Abschleppring | 69 | |
| 4 | Sitzfläche | 37 | Federkonstruktion | 70 | |
| 5 | Fläche | 38 | Schraube | 71 | |
| 6 | Frontseite | 39 | Anlagefläche | 72 | |
| 7 | Rolle | 40 | | 73 | |
| 8 | Rolle | 41 | | 74 | |
| 9 | Rückseite | 42 | | 75 | |
| 10 | Rolle | 43 | | 76 | |
| 11 | Rolle | 44 | | 77 | |
| 12 | Achse | 45 | | 78 | |
| 13 | Achse | 46 | | 79 | |
| 14 | Achsende | 47 | | | |
| 15 | Achsende | 48 | | | |
| 16 | Verbindungsarm | 49 | | | |
| 17 | Verbindungsarm | 50 | | | |
| 18 | Achsbolzen | 51 | | | |
| 19 | Achsbolzen | 52 | | | |
| 20 | Schraube | 53 | | | |
| 21 | Bolzen | 54 | | | |
| 22 | Verbindungsstange | 55 | | | |
| 23 | Achse | 56 | | | |
| 24 | Achse | 57 | | | |
| 25 | Achsende | 58 | | | |
| 26 | Achsende | 59 | | | |
| 27 | Verbindungsarm | 60 | | | |
| 28 | Verbindungsarm | 61 | | | |
| 29 | Achsbolzen | 62 | | | |
| 30 | Achsbolzen | 63 | | | |
| 31 | Schraube | 64 | | | |
| 32 | Bolzen | 65 | | | |
| 33 | Verbindungsstange | 66 | | | |

## Patentansprüche

1. Rutsch-Auto mit einem Sitzschalenkörper (2), welcher einen Lenkgriff (3), eine Sitzfläche (4), zumindest eine Fläche (5) zum Aufstellen eines Fusses sowie zumindest eine Anlagefläche (39) für Knie aufweist,
**dadurch gekennzeichnet,**
**dass** der Sitzschalenkörper (2) aus zumindest einem Kunststoffteil hergestellt ist und an dem Sitzschalenkörper (2) eine Neige-Lenk-Konstruktion an einer Frontseite (6) und eine Neige-Lenk-Konstruktion an einer Rückseite (9) vorgesehen sind, wobei zumindest Rollen (10, 11), Verbindungsarme (27, 28), eine Verbindungsstange (33) und eine Federkonstruktion (37) als Teil der Neige-Lenk-Konstruktion an der Rückseite (9) des Sitzschalenkörpers (2) vorgesehen sind, **dadurch gekennzeichnet dass** die Rollen (7, 8 bzw.10,11) um jeweils eine eigene Achse (12, 13 bzw. 23, 24) drehbar angeordnet sind und ein jeweils der Rolle (7 bzw. 8, 10 bzw.11) gegenüberliegendes Achsende (14 bzw. 15, 25 bzw. 26) mit dem Verbingungsarm (16 bzw. 17, 27 bzw. 28) bewegbar über einen Achsbolzen (18 bzw. 19, 29 bzw 30) verbunden ist.

2. Rutsch-Auto mit einem Sitzschalenkörper (2), welcher einen Lenkgriff (3), eine Sitzfläche (4) sowie eine Fläche (5) zum Aufstellen eines Fusses aufweist, **dadurch gekennzeichnet, dass** eine Neige-Lenk-Konstruktion an der Frontseite (6) gegenüber einer Neige-Lenk-Konstruktion an der Rückseite (9) mit unterschiedlichen Winkeln in bzw. an dem Sitzschalenkörper (2) befestigbar ist, wobei zumindest Rollen (10, 11), Verbindungsarme (27, 28), eine Verbindungsstange (33) und eine Federkonstruktion (37) als Teil der Neige-Lenk-Konstruktion an der Rückseite (9) des Sitzschalenkörpers (2) vorgesehen sind, **dadurch gekennzeichnet dass** die Rollen (7, 8 bzw.10,11) um jeweils eine eigene Achse (12, 13 bzw. 23, 24) drehbar angeordnet sind und ein jeweils der Rolle (7 bzw. 8, 10 bzw.11) gegenüberliegendes Achsende (14 bzw. 15, 25 bzw. 26) mit dem Verbingungsarm (16 bzw. 17, 27 bzw. 28) bewegbar über einen Achsbolzen (18 bzw. 19, 29 bzw 30) verbunden ist.

3. Rutsch-Auto nach Anspruch 1 und 2, **dadurch gekennzeichnet, dass** zumindest Rollen (7, 8), Verbindungsarme (16, 17), eine Verbindungsstange (22) und eine Federkonstruktion (34) als Teil der Neige-Lenk-Konstruktion an der Frontseite (6) des Sitzschalenkörpers (2) vorgesehen sind.

4. Rutsch-Auto nach Anspruch 3, **dadurch gekennzeichnet, dass** zumindest zwei Rollen (7, 8) an der Frontseite (6) und weitere zumindest zwei Rollen (10, 11) an der Rückseite (9) des Sitzschalenkörpers (2) angeordnet sind.

5. Rutsch-Auto nach wenigstens einem der Ansprüche 3 bis 4, **dadurch gekennzeichnet, dass** die Verbindungsarme (16, 17 bzw. 27, 28) einerseits über Schrauben (20 bzw. 31) mit dem Sitzschalenkörper (2) und andererseits über Bolzen (21 bzw. 32) mit der Verbindungsstange (22 bzw. 33) beweglich verbunden sind.

6. Rutsch-Auto nach einem der vorigen Ansprüche 3 bis 5, **dadurch gekennzeichnet, dass** die Federkonstruktion (34 bzw. 37) U-förmig ausgebildet ist und sowohl mit der Verbindungsstange (22 bzw. 33) als auch mit dem Sitzschalenkörper (2) auf der Frontseite (6) bzw. der Rückseite (9) bevorzugt über eine Schraube (35 bzw. 38) verbunden ist

## Claims

1. Slide car with a seat shell body (2), which has a steering handle (3), a seat area (4), at least one area (5) for placing a foot and at least one contact area (39) for knees, wherein the seat shell body (2) is made of at least one plastic part and on the seat shell body (2) a tilt-steering construction is provided on a front side (6) and a tilt-steering construction is provided on a rear side (9), wherein at least rollers (10, 11), connecting arms (27, 28), a connecting rod (33) and a spring construction (37) are provided as parts of the tilt-steering construction on the rear side (9) of the seat shell body (2), **characterized in that** the rollers (7, 8 respectively 10, 11) are each arranged rotatably about an own axis (12, 13 respectively 23, 24) and that an axle end (14 respectively 15, 25 respectively 26) opposite the roller (7 respectively 8, 10 respectively 11) is movably connected to the connecting arm (16 respectively 17, 27 respectively 28) via an axle bolt (18 respectively 19, 29 respectively 30).

2. Slide car with a seat shell body (2), which has a steering handle (3), a seat area (4) and an area (5) for placing a foot, wherein a tilt-steering construction on the front side (6) in relation to a tilt-steering construction on the rear side (9) is mountable with different angles in respectively on the seat shell body (2), wherein at least rollers (10, 11), connecting arms (27, 28), a connecting rod (33) and a spring construction (37) are provided as parts of the tilt-steering construction on the rear side (9) of the seat shell body (2), **characterized in that** the rollers (7, 8 respectively 10, 11) are each arranged rotatably about an own axis (12, 13 respectively 23, 24) and that an axle end (14 respectively 15, 25 respectively 26) opposite the roller (7 respectively 8, 10 respectively 11) is movably connected to the connecting arm (16 respectively 17, 27 respectively 28) via an axle bolt (18 respectively 19, 29 respectively 30).

3. Slide car according to claims 1 and 2, **characterized in that** at least rollers (7, 8), connecting arms (16, 17), a connecting rod (22) and a spring construction (34) are provided as parts of the tilt-steering construction on the front side (6) of the seat shell body (2).

4. Slide car according to claim 3, **characterized in that** at least two rollers (7, 8) are arranged on the front side (6) and further at least two rollers (10, 11) are arranged on the rear side (9) of the seat shell body (2).

5. Slide car according to at least one of the claims 3 to 4, **characterized in that** the connecting arms (16, 17 respectively 27, 28) are movably connected on the one hand via screws (20 respectively 31) to the seat shell body (2) and on the other hand via bolts (21 respectively 32) to the connecting rod (22 respectively 33).

6. Slide car according to one of the preceding claims 3 to 5, **characterized in that** the spring construction (34 respectively 37) is U-shaped and is connected both to the connecting rod (22 respectively 33) and to the seat shell body (2) on the front side (6) respectively the rear side (9), preferably via a screw (35 respectively 38).

## Revendications

1. Voiture porte-enfant avec un corps de plateau de siège (2) qui présente une poignée de direction (3), une surface de siège (4), au moins une surface (5) pour placer un pied et au moins une surface de contact (39) pour le genou,
**caractérisée par le fait**
**que** le corps de plateau de siège (2) est réalisé en au moins une partie en matériau plastique et que sur le corps de plateau de siège (2) sont prévues une construction de direction inclinable d'un côté avant (6) et une construction de direction inclinable d'un côté arrière (9), où au moins des roulettes (10, 11), des bras de connexion (27, 28), une bielle (33) et une construction à ressort (37) comme partie de la construction de direction inclinable sont prévus du côté arrière (9) du corps de plateau de siège (2),
**caractérisée par le fait que** les roulettes (7, 8 ou 10, 11) sont disposées, chacune, de manière rotative autour d'un propre axe (12, 13 ou 23, 24) et qu'une extrémité d'axe (14 ou 15, 25 ou 26) opposée respectivement à la roulette (7 ou 8, 10 ou 11) est connectée de manière mobile au bras de connexion (16 ou 17, 27 ou 28) par l'intermédiaire d'un boulon d'axe (18 ou 19, 29 ou 30).

2. Voiture porte-enfant avec un corps de plateau de siège (2) qui présente une poignée de direction (3), une surface de siège (4) et une surface (5) pour placer un pied,
**caractérisée par le fait**
**qu'**une construction de direction inclinable du côté avant (6) peut être fixée opposée à une construction de direction inclinable du côté arrière (9) selon des angles différents dans ou au corps de plateau de siège (2), dans lequel au moins des roulettes (10, 11), des bras de connexion (27, 28), une bielle (33) et une construction à ressort (37) comme partie de la construction à direction inclinable sont prévus du côté arrière (9) du corps de plateau de siège (2),
**caractérisée par le fait que** les roulettes (7, 8 ou 10, 11) sont disposées, chacune, de manière rotative autour d'un propre axe (12, 13 ou 23, 24) et qu'une extrémité d'axe (14 ou 15, 25 ou 26) opposée respectivement à la roulette (7 ou 8, 10 ou 11) est connectée de manière mobile au bras de connexion (16 ou 17, 27 ou 28) par l'intermédiaire d'un boulon d'axe (18 ou 19, 29 ou 30).

3. Voiture porte-enfant selon les revendications 1 et 2, **caractérisée par le fait qu'**au moins des roulettes (7, 8), des bras de connexion (16, 17), une bielle (22) et une construction à ressort (34) sont prévus comme partie de construction de direction inclinable du côté avant (6) du corps de plateau de siège (2).

4. Voiture porte-enfant selon la revendication 3, **caractérisée par le fait qu'**au moins deux roulettes (7, 8) sont disposées du côté avant (6) et qu'au moins deux autres roulettes (10, 11) sont disposées du côté arrière (9) du corps de plateau de siège (2).

5. Voiture porte-enfant selon au moins l'une des revendications 3 à 4, **caractérisée par le fait que** les bras de connexion (16, 17 ou 27, 28) sont connectés de manière mobile, d'une part, par l'intermédiaire de vis (20 ou 31) au corps de plateau de siège (2) et d'autre part, par l'intermédiaire de boulons (21 ou 32) à la bielle (22 ou 33).

6. Voiture porte-enfant selon l'une des revendications précédentes 3 à 5, **caractérisée par le fait que** la construction à ressort (34 ou 37) est réalisée en forme de "U" et est connectée tant à la bielle (22 ou 33) qu'au corps de plateau de siège (2) du côté avant (6) ou du côté arrière (9), de préférence par l'intermédiaire d'une vis (35 ou 38).
